# EUROPEAN PATENT SPECIFICATION

(11) **EP 0 441 497 B1**
(45) Date of publication and mention of the grant of the patent: **18.09.1996**
(21) Application number: 91300488.3
(22) Date of filing: 23.01.1991
(51) Int. Cl.: G06T 11/00

(54) **Electronic image processing system**
Elektronisches Bildverarbeitungssystem
Système de traitement d'image électronique

(30) Priority: 05.02.1990 GB 9002474
(43) Date of publication of application: 14.08.1991
(73) Proprietor: CROSFIELD ELECTRONICS LIMITED, Hemel Hempstead Hertfordshire HP2 7RH (GB)
(72) Inventor: Freeman, Stephen, Leighton Buzzard, Bedfordshire LU7 8HJ (GB)
(74) Representative: Skone James, Robert Edmund

(56) References cited:
- EP-A- 0 269 334
- EP-A- 0 323 168
- EP-A- 0 342 838
- IBM TECHNICAL DISCLOSURE BULLETIN, vol. 33, no. 3B, August 1990, NEW YORK, USA page 31 'MIN-MAX SLIDER'

## Description

The invention relates to an electronic image processing system such as an electronic image creation system in which images are created directly, electronically by an operator, or an image modification system in which a previously generated image (either generated electronically or by scanning an original) is modified.

A powerful tool to enable parts of an electronically represented image to be modified is known as a mask. This defines a region of an image which can then be modified differently from other regions of the image or not modified while other regions are modified. There are many ways in which a mask can be generated, one of which is by selecting those pixels in the original image which have colour components falling within certain predefined ranges. Conventionally, such a colour selective mask is generated by an operator setting manually the desired ranges for each colour component, the system then scanning the original image pixel by pixel and allocating a mask value to each pixel depending upon whether or not the colour components of the pixel fall within the predefined ranges. In the past, the determination of the ranges for each colour component has been achieved by a manual setting of upper and lower limits, for example density values by the operator inputting numerical values.

EP-A-0269334 describes a colour image processing apparatus that comprises a colour appointing device for enabling an operator to appoint any desired colour involved in an original image, a colour range changing device for manually or automatically changing the size of range of the colours which can be regarded as being the same as the predetermined colour, a target colour appointing device for appointing a colour to which the predetermined colour is to be converted and a colour image former.

EP-A-0342838 describes a user interface system, for data input, that allows a user to select a menu item and simultaneously select a value from a range of values. This is done by the use of a cursor such that a menu item positioned beneath the cursor becomes highlighted and the relative position of the cursor within the menu item determines the value from said range. Upon input selection the selected menu item and relative value are returned to the application program running on a data processing system.

EP-A-0323168 describes a colour correction method for a video graphics system that defines a region of colour space within which target objects to be corrected lie. The region is defined automatically by positioning a target box within a representative portion of the target object within a video picture and computing from the pixels within the target box a range of colour parameters which include the target object. A desired colour for the target object is selected, and all pixels which are both within the video picture or selected portion thereof and also within the defined region of colour space are changed accordingly.

We have devised a new system for enabling a mask to be generated. Thus, in accordance with the present invention as defined in claim 1, an electronic image processing system comprises an image store for storing digital data defining the colour component content of pixels of the image; a display connected to the image store for displaying the image; a control data store for storing control data for each image pixel; processing means; and input means, the processing means being adapted to cause the display to display a scale of colour values for each colour component together with respective indicator bands superimposed thereon, the outer edges of each of which said bands defining a corresponding range of colour values of that band, the limits of said range of colour values being not greater than the limits of said scale of colour values, and said processor means being responsive to operator controlled signals from the input means to change the size and position on the respective scales of the displayed bands and to store the current colour value ranges defined by said bands and wherein the processing means generates a colour selective mask by scanning the stored image and storing appropriate values of control data for each pixel of the image in the control data store depending on whether or not the currently accessed image pixel colour component values fall within the previously stored colour value ranges characterised in that said processing means causes a displayed band to be stretched when the operator moves a cursor away from the band in the direction of stretching and to be shrunk when the operator moves a cursor towards the band in the direction of shrinking.

We have devised a new system in which a visual display is provided to enable the various colour ranges to be selected. This provides a much clearer understanding to the operator of the bands which he is selecting and also makes it much easier for the operator to select those bands.

Typically, the scale of colour values will represent a scale of colour intensities, for example ranging from 0% to 100%.

Conveniently, each scale is displayed vertically with the lowest value at the bottom of the display and the highest value at the top.

The input means may comprise a digitizing tablet and indicator. This is useful since it avoids the need for the operator, who is already using the digitizing tablet, to switch to a keyboard to define the mask parameters.

An example of an electronic image processing system according to the invention will now be described with reference to the accompanying drawings, in which:-
Figure 1 is a block diagram of the system;
Figure 2 is a block diagram of a graphics image processor of Figure 1; and,
Figure 3 illustrates a typical screen display.

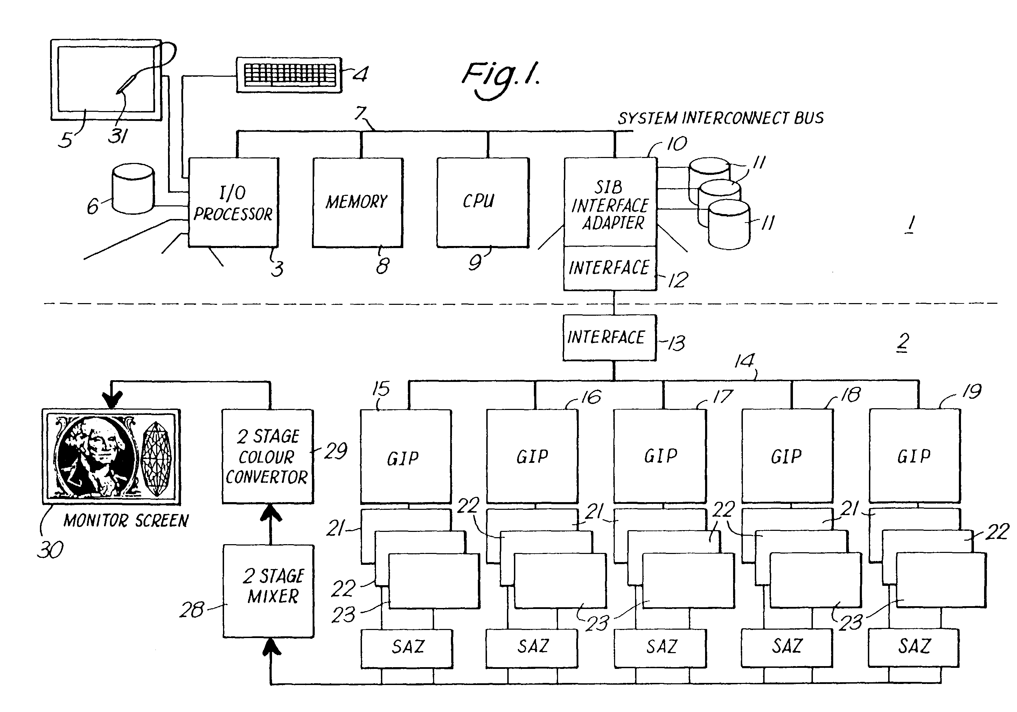

The apparatus shown in Figure 1 can be divided into two primary parts. These comprise the host 1 and the graphics sub-system 2. The division is shown in Figure 1 by a dashed line. The host 1 is a 68020 microprocessor based system running UNIX which is a multi-tasking, multi-user operating system. The host comprises an I/O processor 3 coupled to a keyboard 4, a digitizing tablet 5 and associated pen 31, a system disk 6 and other data sources (not shown). The I/O processor 3 is connected to a system inter-connect bus (SIB) 7 which is connected to ROM and RAM memory 8, a CPU 9, and an interface adapter 10. The interface adapter 10 is connected to a number of high speed image discs 11 which hold data defining the colour content of pixels of images at high resolution, the adapter also being connected via an interface 12 with the graphics sub-system 2. As mentioned above, the host has a conventional form and will not be described in detail. However, the SIB 7 is described in more detail in EP-A-0332417.

The programme that runs on the host is a single "process" which reads and processes inputs from the digitizing tablet 5 under operator control and directs the graphics part 2 to display the host's responses to those inputs on the graphics monitor 30. Essentially, the system takes advantage of the host system in being able to perform a majority of the calculations so that only a small amount of control data is passed to the graphics sub-system. This graphics part 2 is much better than the host 1 at creating and manipulating graphical objects but the host is better at controlling input/output to peripherals, discs and tapes and is relatively easy to programme.

The graphics sub-system 2 comprises an interface 13 which connects the graphics part to the host 1, the interface 13 being connected to a bus 14. The bus 14 is connected to five graphics image processors (GIPs) 15-19. In this embodiment, it is assumed that the images are defined by four colour components, namely cyan, magenta, yellow and black, there being a separate GIP for each colour. Thus, the GIP 15 processes the cyan colour component, the GIP 16 the magenta colour component, the GIP 17 the yellow colour component and the GIP 18 the black colour component. If the image was represented by a different number of colour components, for example red, green and blue then only three of the GIPs would be needed. The advantage of providing the GIPs 15-18 in parallel is that each component of each pixel in the image can be processed in parallel so that the overall processing time is reduced by up to four times over the processing time with a single processor. A further advantage of using the GIPs is that each has a bit-slice processor on which the programmer can define instructions useful for a particular application.

A fifth GIP 19 is provided for defining one or more masks and other features.

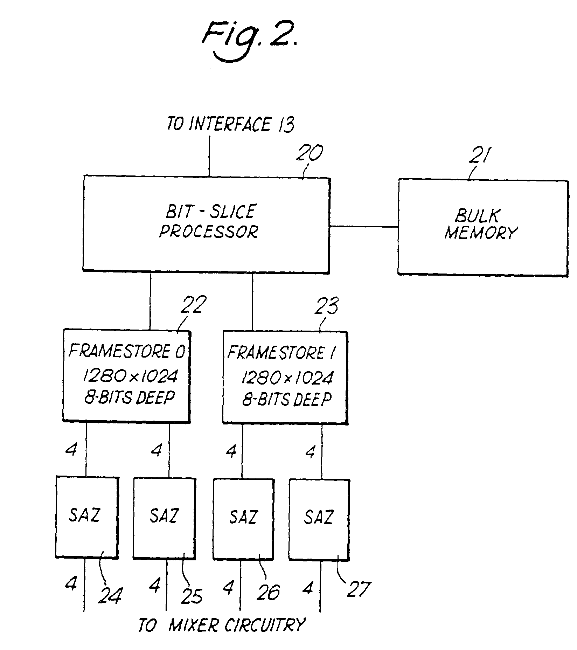

The construction of one of the GIPs of Figure 1 is shown in Figure 2. Each GIP comprises a bit-slice processor 20 coupled to bulk memory 21. This memory 21 will hold image data, brush profiles and text as required and is used as virtual image memory.

The bit-slice processor 20 is also connected to a pair of framestores 22, 23 each of which has dimensions 1280x1204 and is 8 bits deep. In the GIPs 15-18, each framestore will hold 8 bit colour data while in the mask GIP 19 each framestore can be used to hold 8 bit masks or two separate 4 bit masks. Furthermore, one of the framestores in the GIP 19 can be used to display menus in one four bit plane and overlays in the other four bit plane. Overlays comprise construction lines and boxes and the like which are to be displayed on the monitor.

The eight bit data in each framestore 22, 23 is applied in four bit "nibbles" to respective scroll, amplify and zoom circuits 24-27 which operate in a conventional manner to perform one or more of the functions of scroll, zoom and amplify, the outputs from these circuits being fed to a mixer circuit 28. The circuit 28 mixes the data from each of the framestores 22 associated with the GIPs 15-18 with the data from each of the frame stores 23 associated with the GIPs 15-18 in accordance with the mask stored in the framestore 22 of the GIP 19. This mixer circuit which operates in two stages is described in more detail in EP-A-0344976.

The output from the mixer circuit 28 is fed to a two stage colour converter 29 which converts the four colour component data to three colour component data e.g. red, green and blue suitable for controlling the display on a monitor screen 30.

In use, images are stored on the high speed image disks 11 and these images may have been generated by scanning original transparencies or other representations or they may have been created electronically using an electronic paint brush. The host 1 causes relevant portions of these images to be "paged" in and out of the bulk memory 21 in the GIPs 15-18 and brush profiles to be loaded and unloaded from the bulk memory 21 in the GIP 19. The interface adaptor 10 has its own 68020 processor to allow it independently to control the disks 11. The GIPs 15-18 are directed by the host 1 to do various things to images in the bulk memory 21 so that when a GIP attempts to access an address in an image that is not currently in its bulk memory then part of that memory is written back to disc and a new portion read in. After the GIPs have finished processing, the data in the framestores is then scrolled, zoomed and/or amplified as necessary, mixed in the circuit 28, converted to monitor format and then displayed.

If the host 1 wishes to display menus on the screen, these are drawn into the mask GIP framestore 23, known as the "overlay plane".

The apparatus shown in Figures 1 and 2 may form part of an image generation system in which images can be generated electronically by an operator suitably manipulating the pen 31 to generate an image which is stored in the disks 11. Alternatively, the image in the disks 11 could have been generated by scanning an original in a conventional manner.

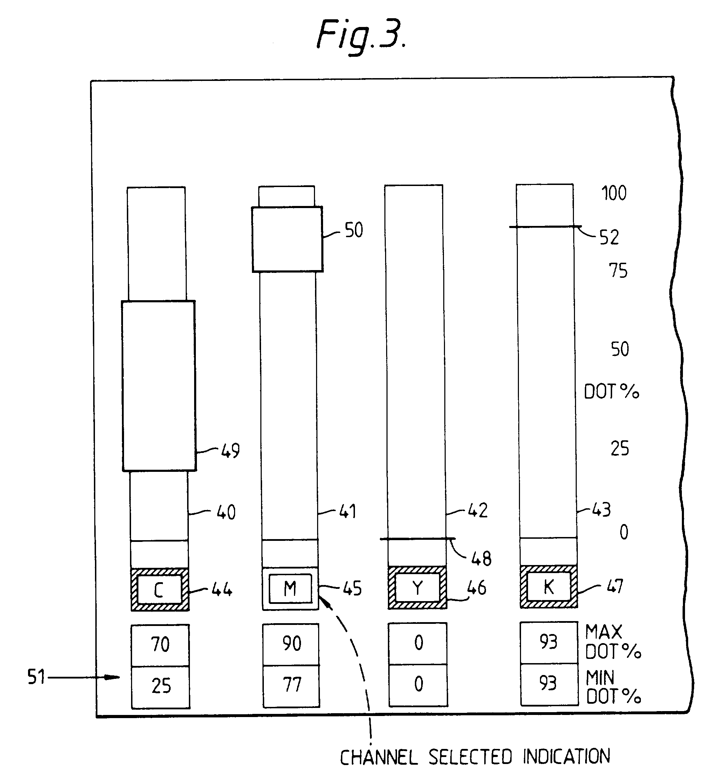

The task with which the present invention is concerned is the generation of an array of control data or mask defining a region of an image. This may subsequently be used to enable that region to be modified in a particular manner, cutout or otherwise manipulated as is known conventionally. In this case, it is intended that the mask will define those pixels whose colour components have values falling within certain predefined ranges. In order to define those ranges, the operator causes the host 1 to enter a colour band selection mode. The host 1 then sends suitable instructions to the GIPs 15-18 to cause the monitor 30 to display four, vertically orientated rectangles 40-43 (Figure 3). Each rectangle 40-43 represents a scale of half-tone dot percentages (0-100%) for each of the four colour components cyan, magenta, yellow, and black. The colour components associated with each rectangle 40-43 are indicated on the screen within borders 44-47 respectively.

Initially, a narrow band or line 48 is displayed extending across each rectangle 40-43 in alignment with the 0% value. Each band or line 48 defines a range of colour values for the corresponding colour component. The initial line is sufficiently thin to define a single colour component value. If the operator wishes to adjust the colour selective mask parameters he moves the pen 31 to cause the cursor displayed on the monitor 30 to enter the chosen rectangle 40-43 and then presses the pen 31 onto the digitizing tablet 5 with sufficient pressure that the host 1 recognises that a new action is required. In this case, the host will initially sense that the cursor is now positioned in one of the rectangles 40-43 and causes a change in colour of the corresponding border 44-47. This change in colour is indicated by the border 45 in Figure 3. In addition, the host 1 determines whether the cursor is positioned over the displayed line 48 or not. If it is, this indicates that the operator simply wishes to move the line (without increasing or decreasing its thickness) to an alternative position. The operator lifts the pen and replaces it on the digitizing tablet so that the cursor is positioned at an alternative position within the rectangle, and the host 1 then instructs the appropriate one of the GIPs 15-18 to display the line 48 at the indicated position. The host 1 also passes the colour value at that position to the appropriate GIP 15-18 where it is stored. Generally each GIP 15-18 stores the minimum and maximum colour values defining a range. In this case, however, the two values are the same. An example of the line being repositioned is shown at 52 in Figure 3.

If the operator wishes to stretch the band towards the top (or bottom) of its range, the operator moves the pen 31 so that the displayed cursor aligns with the top (or bottom) of the corresponding rectangle 40-43. The operator then applies pressure with the pen 31 on the tablet 5 so that the host 1 notes that the cursor is correctly positioned by the operator and depending upon the position of the cursor will cause subsequent movement of the cursor up (or down) to stretch the band in the direction of movement. That is, the host 1 determines continuously new coordinates of the displayed band as the pen 31 is moved, and passes these to the appropriate one of the GIPs 15-18 which then redisplays the band in its stretched form as shown, for example, by the band 49 in Figure 3.

If the operator wishes to shrink the size of the band from a stretched form similar to the band 49 to a shrunk form 50, he positions the pen 31 so that cursor is positioned at the top (or bottom) of the range, in this case the rectangle 41, and then moves the cursor (by moving the pen 31) towards the band. This movement is interpreted by the host 1 as a command to shrink the band from the side adjacent the cursor towards the opposite side of the band, the degree of shrink being determined by the amount of movement of the pen 31.

As with movement of the lines 48, a band such as the band 49 or 50 can be moved bodily along the appropriate rectangle 40-43 by positioning the cursor within the band, pressing down with the pen on the tablet until the threshold pressure is exceeded, and thereafter moving the pen and hence the cursor along the corresponding rectangle. This movement is monitored by the host 1 which causes the GIPs 15-18 to display the band (without stretching or shinking) at different positions along the rectangle corresponding to the position of the cursor.

In addition to the visual display of the bands, the host 1 also causes the graphics sub-system 2 to display the limit values of each band as can be seen at 51 in Figure 3. Here, there are 4 pairs of values displayed, one pair corresponding to each of the rectangles 40-43. Thus, the limits of the cyan range are 70% and 25% dot size, the limits of the magenta range 90% and 70% dot size while the yellow and black ranges are specified by lines 48, 52 respectively as single values 0% and 93% respectively. Each of these values is stored in the appropriate GIP 15-18.

In a further refinement, if the cursor is positioned in the region 51, this indicates to the host 1 that the operator desires to input numbers directly from the keyboard 4. This is achieved by positioning the cursor within each box in the region 51 and thereafter entering the desired number.

During the selection process, the host 1 will cause the GIPs 15-18 to display an image on the monitor 30. At the same time, the GIPs are continually scanning the respective colour separations of the displayed image and comparing each colour component value with the currently stored maxiumum and minimum values displayed in the region 51. If a colour component value of the current, scanned pixel falls within the corresponding range a condition line (not shown) connecting the GIPs 15-19 and normally at a logical HIGH level is maintained at that level. If, however, the pixel value falls outside the specified range then the GIP causes the condition line to take up a LOW level. The GIP 19 monitors the condition line for each pixel and if it is HIGH (i.e. no GIP is out of range) then a logic "1" is stored in the appropriate pixel in the frame store 22 of the GIP 19. If the condition line is LOW (i.e. one or more GIPs is out of range) then a logical "0" is stored. At the same time, the content of the frame store 22 of the GIP 19 is displayed as an overlay over the displayed image by suitably mixing in the mixer 28. The density of the mask can be set between 0% and 100% to enable either a very pale mask mixed with the image to be displayed or alternatively, at the other extreme, the image can be completly obscured by the mask.

It should be understood, that the scanning of the image and updating of the mask as well as the display of the mask occurs simultaneously with the setting of the colour ranges.

It should also be understood that both hard and soft masks can be created using this method since the mask generation mode itself can take any conventional form. For example, rather than setting a mask pixel to a logical "1" or logical "0" the GIP 19 could place a profile, such as a gaussian, onto the mask frame store centered on the current pixel so that not only the current pixel but adjacent pixels are modified by different amounts.

## Claims

1. An electronic image processing system comprising an image store (11) for storing digital data defining the colour component content of pixels of the image; a display (30) connected to the image store for displaying the image; a control data store (21-23) for storing control data for each image pixel; processing means (1, 15-18, 19); and input means (5, 31), the processing means being adapted to cause the display to display a scale of colour values (40-43) for each colour component together with respective indicator bands (48-50, 52) superimposed thereon, the outer edges of each of which said bands defining a corresponding range of colour values of that band, the limits of said range of colour values being not greater than the limits of said scale of colour values, and said processor means (49, 50) being responsive to operator controlled signals from the input means to change the size and position on the respective scales of the displayed bands and to store the current colour value ranges defined by said bands and wherein the processing means generates a colour selective mask by scanning the stored image and storing appropriate values of control data for each pixel of the image in the control data store depending on whether or not the currently accessed image pixel colour component values fall within the previously stored colour value ranges characterised in that said processing means causes a displayed band to be stretched when the operator moves a cursor away from the band in the direction of stretching and to be shrunk when the operator moves a cursor towards the band in the direction of shrinking.

2. A system according to claim 1, wherein the input means comprises a digitizing tablet (5) and indicator pen (31).

3. A system according to any of the preceding claims, wherein the processing means causes an alphanumeric display (51) of the colour values on the display.

## Patentansprüche

1. Elektronisches Bildverarbeitungssystem mit einem Bildspeicher (11) zum Speichern digitaler Daten, welche den Farbkomponenteninhalt der Bildpunkte des Bildes definieren, mit einer an den Bildspeicher angeschlossenen Anzeige (30) zur Anzeige des Bildes, einem Steuerdatenspeicher (21-23) zum Speichern von Steuerdaten für jeden Bildpunkt des Bildes, Prozessoren (1,15-18,19) und Eingabemittel (5,31), wobei die Prozessoren in der Lage sind, auf der Anzeige eine Skala von Farbwerten (40-43) für jede Farbkomponente jeweils zusammen mit entsprechenden, überlagerten Indikatorbändern (48-50,52) zur Anzeige zu bringen, deren Außenkanten jeweils einen entsprechenden Bereich von Farbwerten dieses Bandes definieren, die Grenzen des Bereiches dieser Farbwerte nicht größer sind als die Grenzen der Skala der Farbwerte, und mit Prozessoren (49,50), die auf bedienergeführte Signale der Eingabemittel ansprechen, um die Größe und Lage der angezeigten Bänder auf den jeweiligen Skalen zu ändern und die von den Bändern definierten Farbwertbereiche zu speichern, und wobei die Prozessoren eine farbselektive Maske erzeugen, indem das gespeicherte Bild abgetastet wird und passende Werte der Steuerdaten für jeden Bildpunkt des Bildes im Steuerdatenspeicher abhängig davon gespeichert werden, ob die Farbkomponentenwerte des gerade angesprochenen Bildpunktes des Bildes in die vorher gespeicherten Farbwertbereiche fallen oder nicht, dadurch gekennzeichnet, daß die Prozessoren in der Lage sind, ein zur Anzeige gebrachtes Band zu verlängern, wenn der Bediener einen Cursor vom Band weg in Richtung der Verlängerung führt und ein angezeigtes Band zu verkürzen, wenn der Bediener den Curser zum Band hin in Richtung der Verkürzung führt.

2. System nach Anspruch 1, bei dem die Eingabemittel ein digitalisierendes Tablett (5) und einen Anzeigestift (31) aufweisen.

3. System nach einem der vorhergehenden Ansprüche, bei dem die Prozessoren in der Lage sind, eine alphanumerische Anzeige (51) der Farbwerte auf dem Anzeigefeld zu liefern.

## Revendications

1. Système électronique de traitement d'images, comprenant une réserve à images (11) pour conserver des données numériques définissant le contenu des composantes de couleur des pixels de l'image; un affichage (30) raccordé à la réserve à images, pour afficher l'image; une réserve de données de commande (21-23) pour conserver des données de commande pour chaque pixel d'image; des moyens de traitement (1, 15-18, 19); et un moyen d'entrée (5, 31), le moyen de traitement étant adapté pour présenter sur l'affichage, pour chaque composante de couleur, une échelle de valeurs de couleur (40-43), sur laquelle est superposée une bande indicatrice respective (48-50, 52), les bords externes de chacune de ces bandes définissant une plage correspondante de valeurs de couleur de cette bande, les limites de ladite plage de valeurs de couleur n'étant pas supérieures aux limites de ladite échelle des valeurs de couleur, et lesdits moyens à processeur (49, 50) répondant à des signaux commandés par un opérateur, provenant du moyen d'entrée, pour modifier la taille et la position des échelles respectives des bandes affichées et pour conserver les plages de valeurs de couleur en cours définies par lesdites bandes, et dans lequel le moyen de traitement génère un masque sélectif de couleurs en balayant l'image conservée et en conservant des valeurs appropriées de données de commande pour chaque pixel de l'image dans la réserve de données de commande, selon que les valeurs des composantes de couleurs des pixels de l'image à laquelle on a accès actuellement tombent ou non dans les plages de valeurs de couleur conservées précédemment, caractérisé en ce que ledit moyen de traitement étire une bande affichée lorsque l'opérateur éloigne un curseur de la bande dans la direction d'étirement, et contracte une bande d'étirement lorsque l'opérateur déplace un curseur vers la bande dans la direction de contraction.

2. Système selon la revendication 1, dans lequel le moyen d'entrée comprend une tablette de numérisation (5) et un stylo indicateur (31).

3. Système selon l'une quelconque des revendications précédentes, dans lequel le moyen de traitement provoque un affichage alphanumérique (51) des valeurs de couleur sur l'affichage.
